# EUROPÄISCHE PATENTANMELDUNG

(11) **EP 3 957 531 A1**
(43) Veröffentlichungstag der Anmeldung: **23.02.2022**
(21) Anmeldenummer: 21186320.4
(22) Anmeldetag: 19.07.2021
(51) Int. Cl.: B60W 30/09, B60W 30/095, G05B 19/042, G05D 1/00, B60W 60/00, B60W 50/023, B60W 50/00

(54) **COMPUTERIMPLEMENTIERTES VERFAHREN, COMPUTERSYSTEM UND COMPUTERPROGRAMM ZUM AUSFÜHREN EINER NOTFALLTRAJEKTORIE FÜR EIN AUTOMATISIERTES FAHRSYSTEM UND AUTOMATISIERTES FAHRSYSTEM**

(30) Priorität: 18.08.2020 DE 102020210468
(71) Anmelder: ZF Friedrichshafen AG, 88046 Friedrichshafen (DE)
(72) Erfinder: Ruchti, Martin, 88085 Langenargen (DE); Bollmann, Martin, 88094 Oberteuringen (DE); Ringenauer, Stefan, 88677 Markdorf (DE); Hinsberger, Arno, 88281 Schlier (DE)
(74) Vertreter: ZF Friedrichshafen AG

(57) **Zusammenfassung**

Computerimplementiertes Verfahren zum Ausführen einer Notfalltrajektorie (003a) für ein automatisiertes Fahrsystem (001) umfassend die Schritte Erhalten von Umfelderkennungen aus Daten von Sensoren (V1), kontinuierliches Berechnen von Notfalltrajektorien (003a, 003b, 003c, 003d) in vorgegebenen Zeitschritten, wobei Eingangswerte für die Berechnungen die Daten der Sensoren, Objekte (004) aus den Umfelderkennungen und/oder Daten des Fahrsystems (001) umfassen und die Notfalltrajektorien (003a) in Abhängigkeit der Eingangswerte derart resultieren, dass das Fahrsystem (001) sich jeweils kollisionsfrei und/oder unkritisch bewegt, wenn eine der Notfalltrajektorien (001) ausgeführt wird (V2), und Aktivieren der Notfalltrajektorie (003a) aus einem zurückliegenden Zeitschritt in einer Aktuatorik (006) des Fahrsystems (001) zur Längs- und/oder Querführung, wenn bei der Berechnung in einem aktuellen Zeitschritt keine Notfalltrajektorie (003a) zustande kommt (V3).

## Beschreibung

Die Erfindung betrifft ein computerimplementiertes Verfahren, Computersystem und Computerprogramm zum Ausführen einer Notfalltrajektorie für ein automatisiertes Fahrsystem und ein automatisiertes Fahrsystem

Fahrzeuge mit ADAS Systemen aber vor allem autonome Fahrzeuge benötigen sehr hohe Zuverlässig bei der Erkennung ihres Umfeldes und bei der Erzeugung von Fahranforderungen. Im Stand der Technik werden Systeme vorgeschlagen, die einen Normalpfad in der Signalverarbeitung haben, und einen sogenannten Sicherheitspfad. Während der Normalpfad auf Komfort und Effizienz und/oder andere Ziele ausgelegt ist, wird der Sicherheitspfad auf die Vermeidung von Gefährdungen und Unfällen optimiert. Damit erlangt der Sicherheitspfad typischerweise die kritischste Bewertung bezüglich ASIL Level, SOTIF Level und vergleichbarem. Damit wiederum wird der Sicherheitspfad aufwändig zu validieren.

Bei der Ausgestaltung eines solchen Sicherheitspfades, der greift, wenn eine Gefahr erkannt wurde oder immanent ist, steht neben der Herausforderung einer sicheren und absicherbaren Umfelderkennung auch die Herausforderung, eine sichere und kollisionsfreie Trajektorie zur Verfügung zu stellen. Dies ist insofern schwierig, als durch komplexe Umfeldgegebenheiten eine Berechnung einer kollisionsfreien Trajektorie hochkomplex und aufwändig werden kann. Je nach Situation kann es damit passieren, dass keine sichere Trajektorie vorliegt, oder aufgrund verzögerter oder fehlerhafter Berechnung gar keine Trajektorie vorliegt. Dies gilt für Normaltrajektorien und Notfalltrajektorien.

Die US 2017 015 288 A1 offenbart eine Bremskontrolleinheit eines Fahrzeuges, die das Fahrzeug veranlasst, einer aktuell berechneten sicheren Trajektorie, das heißt einer Notfalltrajektorie zu folgen, wenn bestimmt wurde, dass ein Kontrollnetzwerk des Fahrzeuges wegen elektrischer Ausfälle nicht mehr arbeitsfähig ist.

Die US 2018 267 549 A1 als auch die US 2018 267 550 A1 offenbaren jeweils einen ersten Datenpfad, in dem Normaltrajektorien berechnet werden, und einen zweiten Datenpfad, in dem ein sicherer Fahrschlauch berechnet wird. Die in dem ersten Datenpfad berechnete Trajektorie wird ausgeführt, wenn sie in dem sicheren Fahrschlauch liegt. Wenn in einem Zeitschritt keine Trajektorie im sicheren Fahrschlauch gefunden wird, wird ein nächster Berechnungszeitraum abgewartet. Wenn auch im nächsten Berechnungszeitraum keine Trajektorie im sicheren Fahrbahnschlauch gefunden wird, wird eine in einem dritten Datenpfad berechnete Notfalltrajektorie ausgeführt. Wenn eine Notfalltrajektorie nicht zustande kommt, wird eine Alarmierung ausgegeben.

Die DE 10 2014 212 898 A1 offenbart das Auslösen einer Notfalltrajektorie, wenn eine Kollision erkannt wird.

Da eine Notfalltrajektorie ausgelöst wird, sobald eine Normaltrajektorie problematisch ist, wird in dem bekannten Stand der Technik erwartet, dass die Notfalltrajektorie immer zur Verfügung steht.

Davon ausgehend lag der Erfindung die Aufgabe zugrunde, in dem Fall, wenn eine Notfalltrajektorie aktuell nicht zur Verfügung steht, dennoch eine sichere Trajektorie für automatisierte Fahrsysteme bereitzustellen, die das Fahrsystem in einen sicheren Zustand bringt, wenn sie umgesetzt wird. Nur mit einer immer verfügbaren und sicheren Trajektorie kann in einem Sicherheitspfad eines autonomen Fahrzeugs eine sichere Reaktion ausgeführt werden.

Das computerimplementierte Verfahren nach Anspruch 1, das Computersystem nach Anspruch 6, das Computerprogramm nach Anspruch 10 und das automatisierte Fahrsystem nach Anspruch 11 lösen jeweils diese Aufgabe.

Nach einem Aspekt stellt die Erfindung ein computerimplementiertes Verfahren zum Ausführen einer Notfalltrajektorie für ein automatisiertes Fahrsystem bereit. Das Verfahren umfasst die Schritte
- Erhalten von Umfelderkennungen aus Daten von Sensoren,
- kontinuierliches Berechnen von Notfalltrajektorien in vorgegebenen Zeitschritten, wobei Eingangswerte für die Berechnungen die Daten der Sensoren, Objekte aus den Umfelderkennungen und/oder Daten des Fahrsystems umfassen und die Notfalltrajektorien in Abhängigkeit der Eingangswerte derart resultieren, dass das Fahrsystem sich jeweils kollisionsfrei und/oder unkritisch bewegt, wenn eine der Notfalltrajektorien ausgeführt wird, und
- Aktivieren der Notfalltrajektorie aus einem zurückliegenden Zeitschritt in einer Aktuatorik des Fahrsystems zur Längs- und/oder Querführung, wenn bei der Berechnung in einem aktuellen Zeitschritt keine Notfalltrajektorie zustande kommt.

Nach einem weiteren Aspekt stellt die Erfindung ein Computersystem zum Ausführen einer Notfalltrajektorie für ein automatisiertes Fahrsystem bereit. Das Computersystem umfasst
- wenigstens eine Erkennungseinheit, die Daten von Sensoren erhält zur Umfelderkennung,
- eine Speichereinheit,
- wenigstens eine Prozessiereinheit, die ausgeführt ist, Notfalltrajektorien nach einem erfindungsgemäßen Verfahren zu berechnen und in der Speichereinheit zu speichern, und
- wenigstens eine Schnittstelle zu einer Aktuatorik des Fahrsystems zur Längs- und/oder Querführung.
Das Computersystem aktiviert die Aktuatorik mit der Notfalltrajektorie aus einem zurückliegenden Zeitschritt, wenn bei der Berechnung in einem aktuellen Zeitschritt keine Notfalltrajektorie zustande kommt.

Nach einem weiteren Aspekt stellt die Erfindung ein Computerprogramm zum Ausführen einer Notfalltrajektorie für ein automatisiertes Fahrsystem bereit. Das Computerprogramm umfasst Befehle, die bewirken, dass ein Computer oder ein erfindungsgemäßes Computersystem ein erfindungsgemäßes Verfahren ausführt, wenn das Computerprogramm auf dem Computer läuft.

Nach einem weiteren Aspekt stellt die Erfindung ein automatisiertes Fahrsystem bereit. Das Fahrsystem umfasst ein erfindungsgemäßes Computersystem. Das Computersystem regelt und/oder steuert automatisiert eine Längs- und/oder Querführung des Fahrsystems.

Vorteilhafte Ausgestaltungen der Erfindung ergeben sich aus den Definitionen, den Unteransprüchen, den Zeichnungen und der Beschreibung bevorzugter Ausführungsbeispiele.

Computerimplementiert bedeutet, dass die Schritte des Verfahrens von einer Datenverarbeitungsvorrichtung, beispielsweise einem Computersystem, umfassend ein Computernetzwerk, beispielsweise in Form eines Cloud-Systems, eine Hardware eines Steuergeräts, oder Teilen davon, ausgeführt werden.

Automatisierte Fahrsysteme führen die Fahraktion umfassend die dynamische Fahraktion automatisiert aus. Die Fahraktion umfasst Fahrfunktionen für Längs- und/oder Querführung, beispielsweise Beschleunigung wie etwa Bremsen oder Lenkung, und Fahrfunktionen zur Kommunikation mit Umfeld, beispielsweise Betätigung einer Lichtanlage wie etwa Scheinwerfer oder Blinker oder Betätigung von Schallerzeugungseinrichtungen, beispielsweise einer Hupe. Automatisiert betreibbare Fahrsysteme umfassen Hardwarekomponenten, beispielsweise Umfelderfassungssensoren, Steuergeräte, Aktuatoren, Antriebs- und Fahrwerkskomponenten, und Softwarekomponenten, beispielsweise Software zum Auswerten von Rohdaten der Umfelderfassungssensoren, zum Bestimmen von Umfeldmodellen oder zum Planen einer Trajektorie oder Mission. Ein Automatisierungslevel der automatisiert betreibbaren Fahrsysteme bestimmt beispielsweise die Norm SAE J3016. Die Erfindung betrifft insbesondere SAE J3016 Level 2+, 3 und/oder 4 AD-Systeme mit entsprechend definierter Betriebsfunktionen, auch Operational Design Domain, abgekürzt ODD, genannt, definierter Überwachung des Fahrumfeldes, auch Object and Event Detection and Response, abgekürzt OEDR, genannt, definierter Trajektorienplanung, auch maneuver behavior genannt, und definierten Systemfehlern, auch failure mode behaviors genannt. Das AD-System wird derart ausgelegt, dass es für diese ODDs, OEDRs, maneuver behavior und failure mode behaviors abgesichert ist und funktioniert. In einem Ausführungsbeispiel der Erfindung ist das automatisierte Fahrsystem eine Buslinie mit fester Route und Spurzuordnung, die von einem Bus, beispielsweise einem People Mover, im SAE J3016 Level 4 Betrieb befahren werden soll. In weiteren Ausführungsbeispielen ist das automatisierte Fahrsystem ein PKW, beispielsweise ein Hybridelektrofahrzeug in Form eines Plug-in-Hybrids oder mit ausschließlich Batterie elektrischem Antrieb.

Eine Notfalltrajektorie ist eine Trajektorie, die das Fahrzeug in einen sicheren Zustand führt, beispielsweise einem Stand an einem Straßenrand. Notfalltrajektorien umfassen sichere Notfalltrajektorien. Sichere Notfalltrajektorien sind Notfalltrajektorien, die einen Pfad beschreiben, der frei von Hindernissen ist, auf dem das Fahrzeug kollisionsfrei fährt. Nach einem Aspekt der Erfindung sind die Notfalltrajektorien sichere Notfalltrajektorien. Der Begriff Notfalltrajektorie umfasst sowohl die von dem Fahrsystem zu fahrende oder gefahrene Trajektorie oder Pfad auf einer Fahrbahn als auch die entsprechenden Regel- und/oder Steuerungssignale, die an eine Aktuatorik des Fahrsystems zur Längs- und/oder Querführung übergeben werden, um das Fahrsystem entlang einem derartigen Pfad zu bewegen.

Die Zeitschritte werden beispielsweise derart gewählt, dass pro Sekunde 30 Umfelderkennungen ausgewertet und in Abhängigkeit davon Notfalltrajektorien berechnet werden.

Umfelderkennungen umfassen die Perzeption des Umfeldes des Fahrsystems. Objekte des Umfeldes sind beispielsweise vorausfahrende und/oder entgegenkommende Verkehrsteilnehmer und/oder Spurmarkierungen.

Die Sensoren, durch die eine Umfelderkennung erhalten wird, umfassen Umfelderkennungssensoren des Fahrsystems. Nach einem Aspekt der Erfindung beruhen die Sensoren auf unterschiedlichen Sensortechnologien, beispielsweise Optik wie etwa Kamerasensoren oder Lidarsensoren, Radar oder Akustik wie etwa Mikrofone. Die Sensoren umfassen im Rahmen der Erfindung auch Beschleunigungssensoren. Die Daten der Sensoren werden als Rohdaten, beispielsweise pixelweise Helligkeitswerte oder Point Clouds, oder als vor-/verarbeitete Rohdaten, beispielsweise semantische Bildsegmentierung, Range-Doppler-Maps oder Mel Spektrogramme, erhalten.

Daten des Fahrsystems umfassen Daten zu dem Fahrzustand des Fahrsystems, beispielsweise Geschwindigkeit, Gierrate, Lenkradwinkel, Motor- und/oder Getriebedaten und/oder Positionsdaten.

Durch das kontinuierliche, das heißt fortwährende, Berechnen von Notfalltrajektorien, insbesondere sicheren Notfalltrajektorien, das heißt insbesondere keine Kollision mit Objekten und Beachten von Spurbegrenzungen, und der Ausführung der Notfalltrajektorie des letzten Zeitschritts bei fehlender unkritischer Trajektorie im aktuellen Zeitschritt, steht eine Notfalltrajektorie immer zur Verfügung. Insbesondere wenn in einem aktuellen Zeitschritt die Umfelderkennung zu komplex ist und/oder die Berechnung einer sicheren Notfalltrajektorie zu komplex und zeitaufwendig ist und damit die Berechnung nicht ergebnisorientiert finalisiert werden kann oder die Berechnung fehlerhaft ist, wird die Notfalltrajektorie aus einem zurückliegenden Zeitschritt aktiviert. Dadurch, dass mittels der Erfindung eine Notfalltrajektorie immer verfügbar ist, ist eine sichere Reaktion des Fahrsystems in einem Sicherheitspfads ausführbar. Damit kann vorteilhafterweise die Fahrfunktion des Fahrsystems abgesichert und validiert werden.

Die Berechnung der Notfalltrajektorie gilt als erfolgreich, wenn ein Erreichen eines sicheren Zustandes innerhalb der zugeordneten Spur und ohne Kollisionen mit Objekten erstellt werden kann.

Im Unterschied zum bekannten Stand der Technik wird die Notfalltrajektorie nicht dann ausgelöst, wenn eine Normaltrajektorie fehlerhaft ist, sondern es wird die Fehleranfälligkeit der Notfalltrajektorie erwartet. Sobald die Notfalltrajektorie über einen zu bestimmenden Zeitraum nicht fehlerfrei zur Verfügung steht, wird ein Notfallmanöver ausgelöst. Dies geschieht unabhängig von der Normaltrajektorie. Dies wird gemacht, da sonst nicht zu jeder Zeit ein sicheres Notfallmanöver vorausgesetzt werden kann. Ziel ist es, immer einen sicheren Anhalteweg zur Verfügung zu haben. Das Fahrsystem passt durch die Erfindung seine Fahrstrategie derart an, dass insbesondere immer ein sicherer Anhalteweg zur Verfügung steht.

Um eine sichere Notfalltrajektorie zu jeder Zeit ausführen zu können, wird erfindungsgemäß die letzte sichere Notfalltrajektorie ausgeführt, solange diese Gültigkeit besitzt. Dafür wird erfindungsgemäß der Zeitraum, in dem eine fehlerhafte oder fehlende Notfalltrajektorie noch akzeptiert wird, an die Trajektorienberechnung angepasst. Liegt über dem definierten Zeitraum keine valide Notfalltrajektorie vor, wird die letzte gültige Notfalltrajektorie ausgeführt. Dazu wird diese in der Aktuatorik aktiviert.

Unkritische Trajektorien umfassen Trajektorien, auf und/oder entlang denen Beschleunigungswerte unterhalb eines dynamischen Grenzbereichs, beispielsweise 8 m/s², liegen, oder auf und/oder entlang denen das Fahrsystem möglichst weit entfernt von kritikalitätserzeugenden Objekten, beispielsweise entgegenkommenden Fahrzeugen, fährt.

Die Aktuatorik des Fahrsystems zur Längs- und/oder Querführung umfasst Motor-, Getriebe- und/oder Akkumulatorelemente, Elektromotoren oder Ventile zur Verstellung von Klappen, Regelung des Durchflusses von Flüssigkeiten oder zum Betätigen von Pumpen zum Druckaufbau, beispielsweise in Brems- und/oder Lenksystemen.

Nach einem Aspekt der Erfindung werden in den Berechnungen der Notfalltrajektorien Bewegungen der Objekte prädiziert. Damit werden mögliche Bewegungen des Umfeldes berücksichtigt. Beispielsweise werden Fahrtrichtung und/oder Fahrgeschwindigkeit des Fahrsystems und/oder anderer Objekte, beispielsweise Fremdfahrzeugen, herangezogen, um den jeweiligen zukünftig möglichen Aufenthaltsbereich zu berechnen. Fahrtrichtung und/oder Fahrgeschwindigkeit des Fahrsystems werden aus den Daten des Fahrsystems erhalten, beispielsweise aus einem Kontrollnetzwerk des Fahrsystems, beispielsweise CAN-Bus. Fahrtrichtung und/oder Fahrgeschwindigkeit anderer Objekte werden aus den Umfelderkennungen geschätzt oder berechnet oder mittels V2V oder V2X Kommunikation erhalten.

Basierend auf der Prädiktion der Bewegungen der Objekte werden nach einem Aspekt der Erfindung Prädiktionsbereiche in Form von Sicherheitsbereichen und/oder Zustandswahrscheinlichkeitsschätzungen bestimmt. Damit ermöglicht es die Erfindung, dass bestimmt werden kann, ob eine Notfalltrajektorie aus einem zurückliegenden Zeitschritt im aktuellen relevanten Zeitschritt immer noch sicher ist. Davon ausgehend betrifft ein weiterer Aspekt der Erfindung, die Aktivierung der Notfalltrajektorie um einige Zeitschritte zu verzögern, um fehlerhafte Aktivierungen zu verhindern.

Nach einem weiteren Aspekt der Erfindung werden in den Berechnungen der Notfalltrajektorien Unfallwahrscheinlichkeiten für die Notfalltrajektorien berechnet. In den Zeitschritten werden dann jeweils diejenigen Notfalltrajektorien ausgewählt, die die geringste Unfallwahrscheinlichkeit besitzen oder deren Unfallwahrscheinlichkeit unter einem vorgegebenen Wert liegt. Bei aller komfortablen Gestaltung der Notfalltrajektorie wird damit das Ziel erreicht, die Wahrscheinlichkeit für Unfälle auf das Minimum zu reduzieren. Nach einem Aspekt der Erfindung werden in dem erfindungsgemäßen Verfahren die Unfälle folgendermaßen priorisiert:
- Priorität 1: körperliche Unversehrtheit,
- Priorität 2: möglichst wenig Schadenskosten.

Nach einem weiteren Aspekt der Erfindung wird eine aktivierte Notfalltrajektorie zugunsten einer komfortableren Fahrsystemführung aufgelöst, wenn zu einem Zeitpunkt nach Aktivieren der Notfalltrajektorie in dem jeweiligen aktuellen Zeitschritt wieder eine Notfalltrajektorie zustande kommt. Sollte wieder eine sichere Notfalltrajektorie zur Verfügung stehen, kann damit das Notfallmanöver auch wieder abgebrochen werden.

Nach einem weiteren Aspekt der Erfindung werden in den Berechnungen der Notfalltrajektorien kaskadiert kritischere Trajektorien berechnet. Damit wird sichergestellt, dass das Fahrsystem nicht öfter als nötig in die Ausführung von unkomfortablen Notfallmanövern kommt. Durch die Berechnung von kaskadiert kritischeren Trajektorien wird in einem gerade noch subkritischen Zustand der Notfalltrajektorie bereits reagiert. Dies kann zum Beispiel die Reduktion der Geschwindigkeit sein. Damit wird die Notfalltrajektorie weniger kritisch und ein Notfallmanöver weniger wahrscheinlich. die Die Berechnung von kaskadiert kritischeren Trajektorien erfolgt nach einem Aspekt der Erfindung in einer Kaskade von drei Stufen: erst Komfort-Notfall, dann Normal-Notfall dann Not-Notfall.

Nach einem weiteren Aspekt der Erfindung umfasst die Erkennungseinheit des Computersystems eine erste Erkennungseinheit und eine zweite Erkennungseinheit. In der ersten Erkennungseinheit werden aus Daten von ersten Sensoren der Sensoren Objekte erkannt, Objekt-Hypothesen gebildet und eine Liste umfassend die erkannten Objekte, die Objekt-Hypothesen und Falsch-Positiv-Objekte bereitgestellt. Dabei erfolgt für jeden der ersten Sensoren oder für jede Kombination der ersten Sensoren die Erkennung der Objekte und die Bildung der Objekt-Hypothesen separat zur Minimierung einer Falsch-Negativ-Rate. In der zweiten Erkennungseinheit werden aus Daten von zweiten Sensoren der Sensoren und der Liste die Objekt-Hypothesen verifiziert und/oder Falsch-Positiv-Objekte falsifiziert. Die Prozessiereinheit prozessiert dann Ergebnisse der zweiten Erkennungseinheit.

Die erste und die zweite Erkennungseinheit umfassen eigene Signalleitungen, Software- und Hardwarekomponenten, insbesondere zum Auswerten von Sensordaten. Die erste und die zweite Erkennungseinheit werden auch erste und zweite Erkennungsstufe genannt. Die erste Erkennungseinheit dient der Objekterkennung. Die zweite Erkennungseinheit dient der Existenzüberprüfung. Durch die Trennung der Funktionalitäten der Objekterkennung und Existenzüberprüfung, das heißt durch Bereitstellen der ersten und der zweiten Erkennungseinheit, werden hochspezifische Systeme oder Teilsysteme genutzt, die auf ihre Aufgabe optimiert sind. Die erste und die zweite Erkennungseinheit ermöglichen eine sichere Umfelderkennung, die Basis für eine sichere Trajektorienberechnung ist. Durch die Existenzprüfung der zweiten Erkennungseinheit wird hinsichtlich SOTIF-Standard ISO/PAS 21448:2019 eine Fehlerrate kleiner oder gleich 10⁻⁹/Stunde erreicht. Die Umfelderkennung ist nach einem Aspekt der Erfindung nicht ausgelegt, um eine komfortable Fahrfunktion umzusetzen, sondern um kritische Unfälle zu vermeiden.

Objekt-Hypothesen umfassen Vermutungen, dass in einem erkannten Bereich des Umfeldes mit einer bestimmten Wahrscheinlichkeit ein Objekt ist.

Nach einem Aspekt der Erfindung sind die ersten Sensoren auf hohe Sensitivität optimiert, um robust gegen Falsch-Negative zu sein. Nach einem weiteren Aspekt der Erfindung sind die zweiten Sensoren optimiert zur Hypothesenprüfung. Die Aufgabe der zweiten Sensoren ist es, die von der ersten Erkennungseinheit bereitgestellten Objekte zu falsifizieren, sollten diese Falsch-Positive sein. Die ersten und zweiten Sensoren umfassen Kamera, Radar, Lidar, Ultraschall und/oder Mikrophone. Prinzipiell können die Sensortechnologien der ersten Sensoren auch für die zweiten Sensoren verwendet werden und umgekehrt. Ein weiterer Aspekt der Erfindung umfasst eine Sensorik, welche aktiv ihren eigenen Input verändert, um Hypothesen überprüfen zu können, beispielsweise aktiv bewegte (sakkadierende) Kameras oder aktiv ausgerichtete Lidare.

Falsch-Positive und Falsch-Negative beschreiben Existenzunsicherheiten, das heißt die Unsicherheit darüber, ob ein von den Sensoren erkanntes und in die Umfeldrepräsentation übernommenes Objekt überhaupt real existiert. Bei Falsch-Positiven wird ein Objekt erkannt, obwohl es tatsächlich nicht existiert. Beispielsweise wird ein auf eine Fahrbahn fallender Schatten als ein Reifen erkannt. Bei Falsch-Negativen wird ein Objekt nicht erkannt, obwohl es tatsächlich existiert.

Nach einem weiteren Aspekt der Erfindung umfasst das Computersystem einen ersten Datenpfad und einen zweiten Datenpfad. Der erste Datenpfad umfasst eine erste der Prozessiereinheiten. Die erste Prozesseinheit wertet die die Daten der Sensoren in einem ersten Erfassungsbereich aus und bestimmt erste Regelungs- und/oder Steuerungssignale für eine Normaltrajektorie bestimmt. Der zweite Datenpfad umfasst eine zweite der Prozessiereinheiten. Die zweite Prozessiereinheit wertet die Daten der Sensoren in einem zweiten Erfassungsbereich aus und berechnet die Notfalltrajektorien. Dabei umfasst der erste Erfassungsbereich den zweiten Erfassungsbereich.

Ein Datenpfad umfasst eine Sequenz von verteilten Softwareprozessen, wobei die einzelnen Softwareprozesse Daten einlesen, verarbeiten und jeweilige Ergebnisse an folgende Softwareprozesse weitergeben. Ferner umfasst ein Datenpfad Hardwarekomponenten umfassend Datenübertragungseinheiten und Datenverarbeitungseinheiten.

Aufgabe des ersten Datenpfades, auch Performanz-Datenpfad genannt, ist eine möglichst weit vorausschauende Regelung im Komfortbereich, zum Beispiel Bestimmung von Beschleunigungen, umfassend auch Verzögerungen, von 1.5m/s², auf Basis aller auch nur teil- und zeitweise über die Sensorik erfassbarer Information und hochperformanter und/oder wissensbasierter Algorithmen, zum Beispiel Erkennung einer Fußgängerabsicht zur Querung der Straße mittels künstlicher neuronaler Netzwerke, beispielsweise Faltungsnetzwerke. Um die hohe funktionale Performance zu erreichen, werden die Sensoren weit außerhalb ihres sicheren Erfassungsbereiches betrieben. Das führt zu statistischer und Szenen systematischer Fluktuation von Messpunkten und damit zu Fehlern in der Umgebungserfassung. Ebenfalls machen gelernte Algorithmen unter diesen Bedingungen Interpretationsfehler. Das Verhalten der Auswertealgorithmik ist nicht zwingend eindeutig vorhersagbar. Das bedeutet, dass eine sichere Regelung nicht gewährleistet werden kann und der Performancepfad entsprechen falsche Trajektorienvorgaben machen kann.

Aufgabe des zweiten Datenpfades, auch Sicherheitspfad genannt, besteht darin, die Sensorik für jede erforderliche Messaufgabe immer nur im sicheren Erfassungsbereich auszuwerten. Die Auswertung erfolgt mit analytischen / nachvollziehbaren Algorithmen. Das Verhalten der Sensorik in Bezug auf die Messaufgabe lässt sich mit spezifizierbaren Testfällen für den gesamten Nutzbereich abtesten. Der sichere Erfassungsbereich ist also durch eine deterministische Umgebungserfassung gekennzeichnet. Die Ergebnisse sind weiter weniger performant als im ersten Datenpfad, zum Beispiel geringere Reichweite, keine Erkennung von Absichten etc., dafür aber immer auf sicher vorhersagbar und prüfbar. Deshalb übernimmt nach einem Aspekt der Erfindung der zweite Datenpfad nur die Überprüfung der Trajektorie oder der Perzeption aus dem ersten Datenpfad und korrigiert diese gegebenenfalls durch ein unkomfortables, zum Beispiel 8m/s² maximaldynamisches, Manöver, um zu verhindern, dass aus dem Fehler im ersten Datenpfad ein kritischer Fehler wird. Durch die Auswertung der Sensorik nur im sicheren Erfassungsbereich mittels nachvollziehbaren Algorithmen wird in dem zweiten Datenpfad hinsichtlich SOTIF-Standard ISO/PAS 21448:2019 eine Fehlerrate kleiner oder gleich 10⁻¹/Stunde erreicht.

Nach einem weiteren Aspekt der Erfindung ist das Computersystem ausgeführt als Plattform zum Einbau in das Fahrsystem. Damit stellt die Erfindung eine Aftermarket-Lösung bereit und beispielsweise können Serienfahrzeuge mit dem erfindungsgemäßen Computersystem nachgerüstet werden. Das Computersystem ist beispielsweise als eine ADAS- oder AD-ECU ausgestaltet. Nach einem Aspekt umfasst die ADAS- oder AD-ECU einen erfindungsgemäßen ersten Datenpfad und einen erfindungsgemäßen zweiten Datenpfad.

Die Erfindung wird in den folgenden Ausführungsbeispielen verdeutlicht. Es zeigen:
Fig. 1a ein Ausführungsbeispiel einer durch das erfindungsgemäße Verfahren berechneten gültigen Notfalltrajektorie,
Fig. 1b ein Ausführungsbeispiel einer ungültigen Notfalltrajektorie,
Fig. 2 ein Ausführungsbeispiel einer Kollision,
Fig. 3 ein schematisches Ausführungsbeispiel eines erfindungsgemäßen Computersystems,
Fig. 4 ein Ausführungsbeispiel zur Prädiktion von Objekten und
Fig. 5 ein Ausführungsbeispiel des erfindungsgemäßen Verfahrens.

In den Figuren bezeichnen gleiche Bezugszeichen gleiche oder funktionsähnliche Bezugsteile. Übersichtshalber werden in den einzelnen Figuren nur die jeweils relevanten Bezugsteile hervorgehoben.

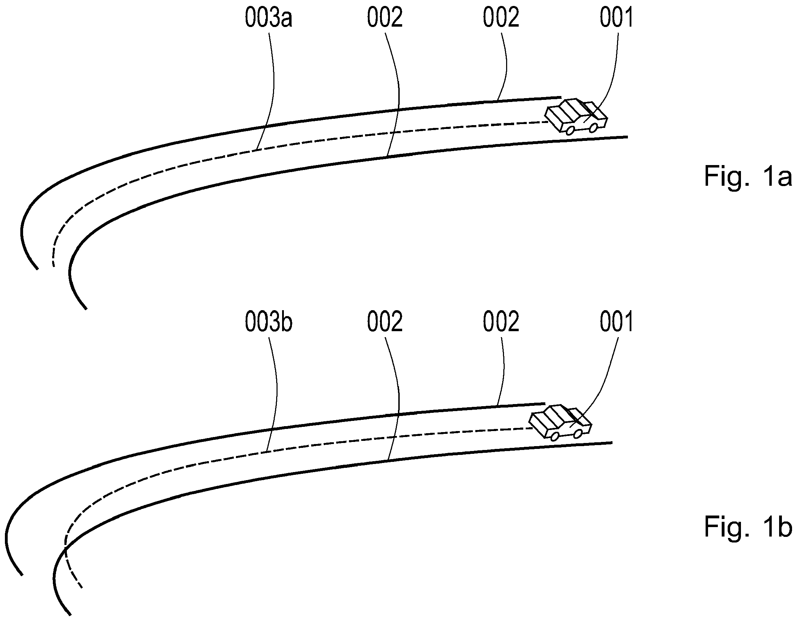

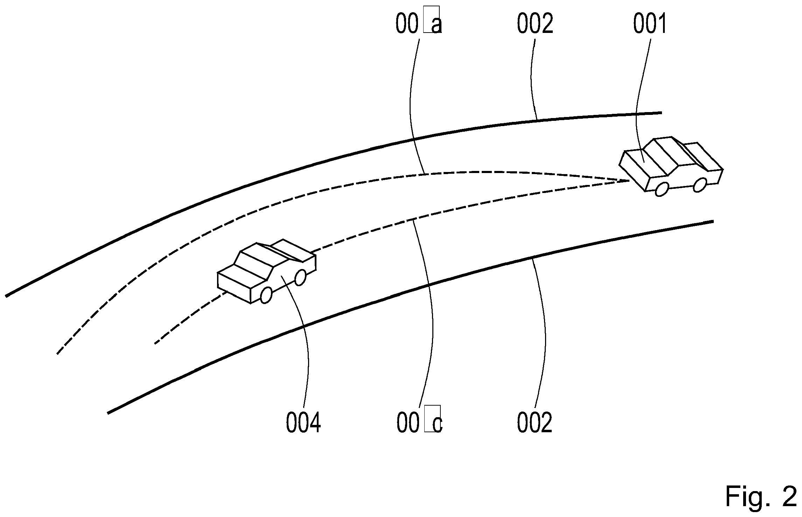

Fig. 1a zeigt das Ergebnis einer erfolgreichen Berechnung einer Notfalltrajektorie 003a, auf oder entlang der ein automatisiertes Fahrsystem 001, beispielsweise ein PKW, einen sicherer Zustand innerhalb der zugeordneten Spurbegrenzung 002 und ohne Kollisionen mit Objekten 004, wie in Fig. 2 gezeigt, erreicht. Die Notfalltrajektorie 003a ist eine gültige Notfalltrajektorie. Im Gegensatz dazu ist die in Fig. 1b gezeigte Notfalltrajektorie 003b eine unzulässige Notfalltrajektorie. Auf oder entlang der Notfalltrajektorie 003b würde das Fahrsystem 001 in einem zukünftigen Zeitpunkt die Spurbegrenzung 002 und damit die Fahrbahn überfahren und möglicherweise auf einer Fahrbahn des Gegenverkehrs anhalten.

In Fig. 2 ist die Kollision mit dem Objekt 004, beispielsweise einem vorausfahrenden Fahrzeug, dargestellt. Die Notfalltrajektorie 003a ist die sichere Notfalltrajektorie. Auf oder entlang der Notfalltrajektorie 003c kollidiert das Fahrsystem 001 mit dem Objekt 004.

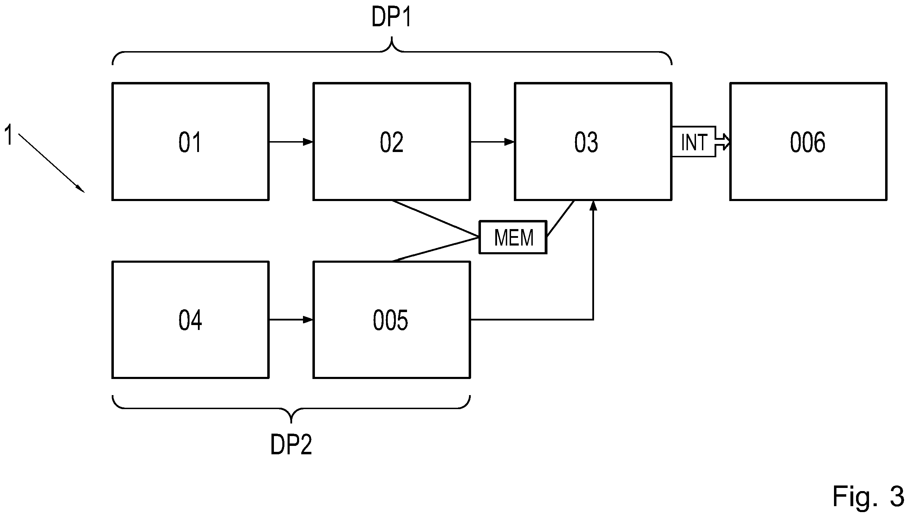

Fig. 3 zeigt einzelne Module oder logische Einheiten eines beispielhaften Computersystems 1. Das Computersystem 1 umfasst eine erste Erkennungseinheit 01, mit der Objekte 004 und ein Umfeld erkannt werden. Hierzu wertet die erste Erkennungseinheit 01 Daten von ersten Sensoren aus. Ferner umfasst das Computersystem 1 eine zweite Erkennungseinheit 04, mit der die tatsächliche Existenz von Objekten 004 überprüft wird. Damit wird eine sichere Umfelderkennung ermöglicht. Des Weiteren umfasst das Computersystem 1 eine Prozessiereinheit. Im Beispiel der Fig. 3 umfasst die Prozessiereinheit drei Software- und/oder Hardwarekomponenten, die beispielsweise als eigenständige Prozessiereinheiten 02, 03 und 005 ausgeführt und hintereinandergeschaltet sind. Die Prozessiereinheit 02 prozessiert die Trajektorienplanung. Die Prozessiereinheit 03 ist eine Entscheidungslogik. Die Prozessiereinheit 005 prozessiert die Notfalltrajektorienplanung. Wenigstens die Ergebnisse der Prozessiereinheit 005 werden in einer Speichereinheit MEM abgespeichert. Außerdem umfasst das Computersystem 1 eine Schnittstelle INT zu einer Aktuatorik 006 des Fahrsystems 001. Die Aktuatorik 006 umfasst beispielsweise Bremse, Lenkung und Antrieb. Die erste Erkennungseinheit 01 und die Prozessiereinheiten 02 und 03 bilden einen ersten Datenpfad DP1. Die zweite Erkennungseinheit 04 und die Prozessiereinheit 005 bilden einen zweiten Datenpfad DP2. Die Entscheidungslogik 03 führt den ersten und zweiten Datenpfad DP1, DP2 durch Ausführen logischer Operationen zusammen, beispielsweise ODER-Entscheidung, Mehrheitsentscheidung oder N-aus-X-Entscheidung, wobei X die Anzahl der Sensoren und N eine vorgegebene Zahl mit N ≤ X ist.

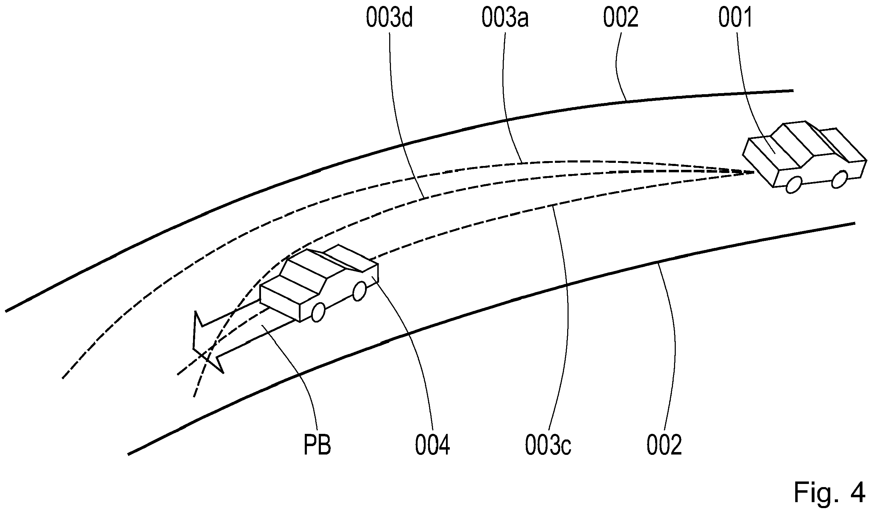

Fig. 4 zeigt beispielsweise die Berechnung eines zukünftig möglichen Aufenthaltsbereich oder Prädiktionsbereich PB. Dieser wird in der Folge von der sicheren Notfalltrajektorie 003a nicht befahren. Die Notfalltrajektorie 003c ist eine unzulässige Notfalltrajektorie, auf oder entlang der das Fahrsystem 001 mit dem Objekt 004 kollidieren würde. Die Notfalltrajektorie 003d ist eine unzulässige Notfalltrajektorie, die mit einem Prädiktionsbereich PB des Objekts 004 kollidiert. In dem erfindungsgemäßen Verfahren oder von dem erfindungsgemäßen Computersystem 1 wird dann von den berechneten Notfalltrajektorien die Notfalltrajektorie 003a in der Aktuatorik 006 aktivieren.

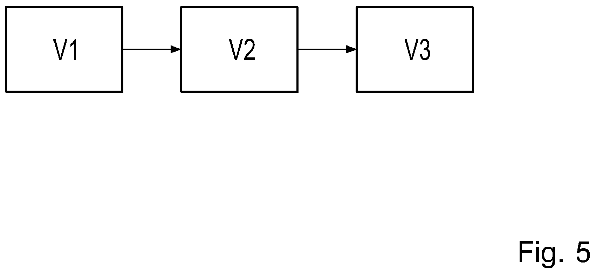

Das erfindungsgemäße Verfahren ist in Fig. 5 schematisch dargestellt. In einem ersten Verfahrensschritt V1 werden Umfelderkennungen aus Daten von Sensoren erhalten. In einem zweiten Verfahrensschritt V2 werden Notfalltrajektorien 003a, 003b, 003c, 003d in vorgegebenen Zeitschritten berechnet. Dabei umfassen Eingangswerte für die Berechnungen die Daten der Sensoren, Objekte 004 aus den Umfelderkennungen 01, 04 und/oder Daten des Fahrsystems 001. Die Notfalltrajektorien 003a resultieren in Abhängigkeit der Eingangswerte derart resultieren, dass das Fahrsystem 001 sich jeweils kollisionsfrei und/oder unkritisch bewegt, wenn eine der Notfalltrajektorien 003a ausgeführt wird. In einem dritten Verfahrensschritt V3 wird die Notfalltrajektorie 003a aus einem zurückliegenden Zeitschritt in der Aktuatorik 006 aktiviert, wenn bei der Berechnung in einem aktuellen Zeitschritt keine sichere Notfalltrajektorie 003a zustande kommt. Beispielsweise kommt in dem aktuellen Zeitschritt nur eine unzulässige Notfalltrajektorie 003c oder 003d zustande.

### Bezugszeichen

- 001: automatisiertes Fahrsystem
- 002: Spurbegrenzung
- 003a: Notfalltrajektorie
- 003b: Notfalltrajektorie
- 003c: Notfalltrajektorie
- 003d: Notfalltrajektorie
- 004: Objekt
- 1: Computersystem
- 01: erste Erkennungseinheit
- 02: Prozessiereinheit
- 03: Prozessiereinheit
- 04: zweite Erkennungseinheit
- 005: Prozessiereinheit
- 006: Aktuatorik
- DP1: erster Datenpfad
- DP2: zweiter Datenpfad
- INT: Schnittstelle
- MEM: Speicher
- PB: Prädiktionsbereich
- V1-V3: Verfahrensschritte

## Patentansprüche

1. Computerimplementiertes Verfahren zum Ausführen einer Notfalltrajektorie (003a) für ein automatisiertes Fahrsystem (001) umfassend die Schritte
• Erhalten von Umfelderkennungen aus Daten von Sensoren (V1),
• kontinuierliches Berechnen von Notfalltrajektorien (003a, 003b, 003c, 003d) in vorgegebenen Zeitschritten, wobei Eingangswerte für die Berechnungen die Daten der Sensoren, Objekte (004) aus den Umfelderkennungen und/oder Daten des Fahrsystems (001) umfassen und die Notfalltrajektorien (003a) in Abhängigkeit der Eingangswerte derart resultieren, dass das Fahrsystem (001) sich jeweils kollisionsfrei und/oder unkritisch bewegt, wenn eine der Notfalltrajektorien (003a) ausgeführt wird (V2), und
• Aktivieren der Notfalltrajektorie (003a) aus einem zurückliegenden Zeitschritt in einer Aktuatorik (006) des Fahrsystems (001) zur Längs- und/oder Querführung, wenn bei der Berechnung in einem aktuellen Zeitschritt keine Notfalltrajektorie (003a) zustande kommt (V3).

2. Verfahren nach Anspruch 1, wobei in den Berechnungen der Notfalltrajektorien (003a) Bewegungen der Objekte (004) prädiziert werden.

3. Verfahren nach Anspruch 1 oder 2, wobei in den Berechnungen der Notfalltrajektorien (003a) Unfallwahrscheinlichkeiten für die Notfalltrajektorien (003a) berechnet werden und in den Zeitschritten jeweils diejenigen Notfalltrajektorien (003a) ausgewählt werden, die die geringste Unfallwahrscheinlichkeit besitzen oder deren Unfallwahrscheinlichkeit unter einem vorgegebenen Wert liegt.

4. Verfahren nach einem der Ansprüche 1 bis 3, wobei eine aktivierte Notfalltrajektorie (003a) zugunsten einer komfortableren Fahrsystemführung aufgelöst wird, wenn zu einem Zeitpunkt nach Aktivieren der Notfalltrajektorie (003a) in dem jeweiligen aktuellen Zeitschritt wieder eine Notfalltrajektorie (003a) zustande kommt.

5. Verfahren nach einem der Ansprüche 1 bis 4, wobei in den Berechnungen der Notfalltrajektorien (003a) kaskadiert kritischere Trajektorien berechnet werden.

6. Computersystem (1) zum Ausführen einer Notfalltrajektorie (003a) für ein automatisiertes Fahrsystem (001) umfassend
• wenigstens eine Erkennungseinheit (01, 04), die Daten von Sensoren erhält zur Umfelderkennung,
• eine Speichereinheit (MEM),
• wenigstens eine Prozessiereinheit (02, 03, 005), die ausgeführt ist, Notfalltrajektorien (003a) nach einem Verfahren der Ansprüche 1 bis 5 zu berechnen und in der Speichereinheit zu speichern, und
• wenigstens eine Schnittstelle (INT) zu einer Aktuatorik (006) des Fahrsystems (001) zur Längs- und/oder Querführung,
wobei das Computersystem (1) die Aktuatorik (006) mit der Notfalltrajektorie (003a) aus einem zurückliegenden Zeitschritt aktiviert, wenn bei der Berechnung in einem aktuellen Zeitschritt keine Notfalltrajektorie (003a) zustande kommt.

7. Computersystem (1) nach Anspruch 6, wobei die Erkennungseinheit (01, 04) eine erste Erkennungseinheit (01) und eine zweite Erkennungseinheit (04) umfasst, wobei
• in der ersten Erkennungseinheit (01) aus Daten von ersten Sensoren der Sensoren Objekte (004) erkannt werden, Objekt-Hypothesen gebildet werden und eine Liste umfassend die erkannten Objekte (004), die Objekt-Hypothesen und Falsch-Positiv-Objekte bereitgestellt wird, wobei für jeden der ersten Sensoren oder für jede Kombination der ersten Sensoren die Erkennung der Objekte (004) und die Bildung der Objekt-Hypothesen separat erfolgt zur Minimierung einer Falsch-Negativ-Rate, und
• in der zweiten Erkennungseinheit (04) aus Daten von zweiten Sensoren der Sensoren und der Liste die Objekt-Hypothesen verifiziert und/oder Falsch-Positiv-Objekte falsifiziert werden,
wobei die Prozessiereinheit (02, 03, 005) Ergebnisse der zweiten Erkennungseinheit (04) prozessiert.

8. Computersystem (1) nach Anspruch 6 oder 7 umfassend einen ersten Datenpfad (DP1) und einen zweiten Datenpfad (DP2), wobei
• der erste Datenpfad (DP1) eine erste der Prozessiereinheiten (002, 03, 005) umfasst, die die Daten der Sensoren in einem ersten Erfassungsbereich auswertet und erste Regelungs- und/oder Steuerungssignale für eine Normaltrajektorie bestimmt, und
• der zweite Datenpfad (DP2) eine zweite der Prozessiereinheiten (002, 03, 005) umfasst, die die Daten der Sensoren in einem zweiten Erfassungsbereich auswertet und die Notfalltrajektorien (003a) berechnet, wobei der erste Erfassungsbereich den zweiten Erfassungsbereich umfasst.

9. Computersystem (01) nach einem der Ansprüche 6 bis 8 ausgeführt als Plattform zum Einbau in das Fahrsystem (001).

10. Computerprogramm zum Ausführen einer Notfalltrajektorie (003a) für ein automatisiertes Fahrsystem (001) umfassend Befehle, die bewirken, dass ein Computer oder ein Computersystem (01) nach einem der Ansprüche 6 bis 9 ein Verfahren nach einem der Ansprüche 1 bis 5 ausführt, wenn das Computerprogramm auf dem Computer läuft.

11. Automatisiertes Fahrsystem (001) umfassend ein Computersystem (01) nach einem der Ansprüche 6 bis 9, wobei das Computersystem (01) eine Längs- und/oder Querführung des Fahrsystems (001) automatisiert regelt und/oder steuert.
